# EUROPEAN PATENT APPLICATION

(11) **EP 1 883 146 A2**
(43) Date of publication of application: **30.01.2008**
(21) Application number: 07005318.6
(22) Date of filing: 14.03.2007
(51) Int. Cl.: H02K 3/52

(54) **Rotating armature**

(30) Priority: 27.07.2006 JP 2006205410
(71) Applicant: SHOWA CORPORATION, Gyoda-shi, Saitama (JP)
(72) Inventor: Saboi, Takahiro, Haga-gun, Tochigi (JP); Nozawa, Hiromi, Gyoda-shi, Saitama (JP)
(74) Representative: Grünecker, Kinkeldey, Stockmair & Schwanhäusser Anwaltssozietät

(57) **Abstract**

In a rotating armature in which a bobbin is attached to a core constituting a stator, a coil is wound around a coil winding portion of the bobbin, and a wind starting and a wind terminating of the coil are respectively inserted to coil insertion grooves provided in an outer peripheral side than the coil winding portion in the bobbin, and coil come-off preventing locking portions are provided in the coil insertion grooves of the bobbin.

## Description

As a rotating armature, there is a structure in which a resin bobbin is attached to a core constituting a stator, a coil is wound around a coil winding portion of the bobbin, each of a wind starting and a wind terminating of the coil is inserted to a coil insertion groove provided in an outer peripheral side than the coil winding portion in the bobbin, and the wound coil is fixed to the bobbin, as described in Japanese Patent Application Laid-open No. 2002-354738 (patent document 1).

In the prior art, since each of the wind starting and the wind terminating of the coil is simply inserted to the coil insertion groove provided in the bobbin, there is a risk that each of the wind starting and the wind terminating of the coil comes off from the coil insertion groove and the coil winding comes loose.

An object of the present invention is to prevent a coil winding from coming apart by simply and securely fixing a wound coil to a bobbin, in a rotating armature.

The present invention relates to a rotating armature comprising: a resin bobbin around a core constituting a stator; a coil wound around a coil winding portion of the bobbin; each of a wind starting and a wind terminating of the coil inserted to a coil insertion groove provided in an outer peripheral side than the coil winding portion in the bobbin: and a coil come-off preventing locking portion provided in the coil insertion groove of the bobbin.

The present invention will be more fully understood from the detailed description given below and from the accompanying drawings which should not be taken to be a limitation on the invention, but are for explanation and understanding only. The drawings:
FIG. 1 is a cross sectional view showing a motor;
FIGS. 2A and 2B show a stator assembly, in which FIG. 2A is a cross sectional view and FIG. 2B is an enlarged view of a main portion;
FIGS. 3A and 3B show the stator assembly, in which FIG. 3A is a front elevational view and FIG. 3B is an enlarged view of the main portion;
FIG. 4A and 4B show a sub assembly in which a terminal is attached to a stator, in which FIG. 4A is a cross sectional view and FIG. 4B is an enlarged view of a main portion;
FIGS. 5A and 5B show a core sub assembly, in which FIG. 5A is a cross sectional view along a line A-A in FIG. 5B, and FIG. 5B is an end elevational view;
FIG. 6 is a plan view showing a bobbin;
FIG. 7 is an end elevational view of the bobbin as seen from one end;
FIG. 8 is an end elevational view of the bobbin as seen from the other end;
FIG. 9 is a cross sectional view along a line IX-IX in FIG. 7;
FIG. 10 is a cross sectional view showing a portion X in FIG. 9 in an enlarged manner; and
FIG. 11 is a schematic view showing a coil winding state of the bobbin.

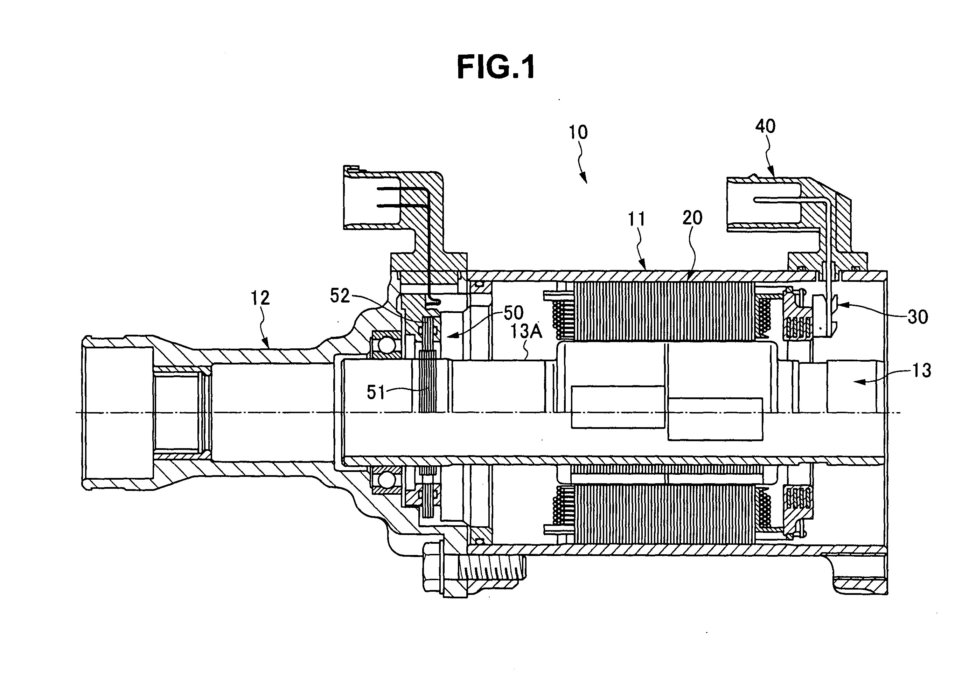

A DC brushless motor 10 corresponding to a rotating armature in accordance with the present invention is structured, as shown in FIG. 1, such that an end housing 12 is attached to one end of a stator assembly 11, and a rotor assembly 13 is rotatably supported to the stator assembly 11 and an inner portion of the end housing 12.

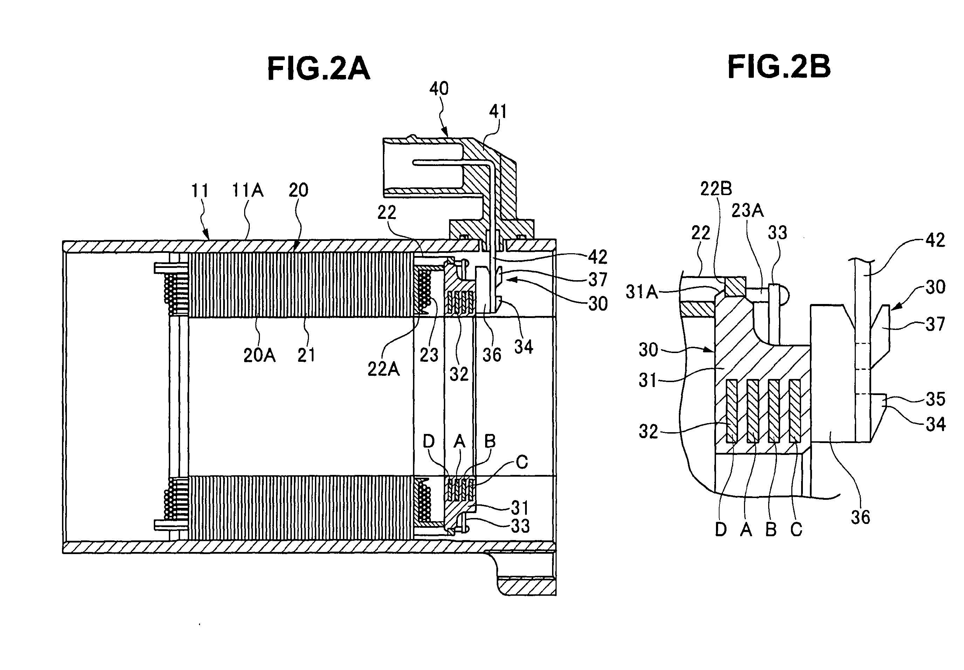

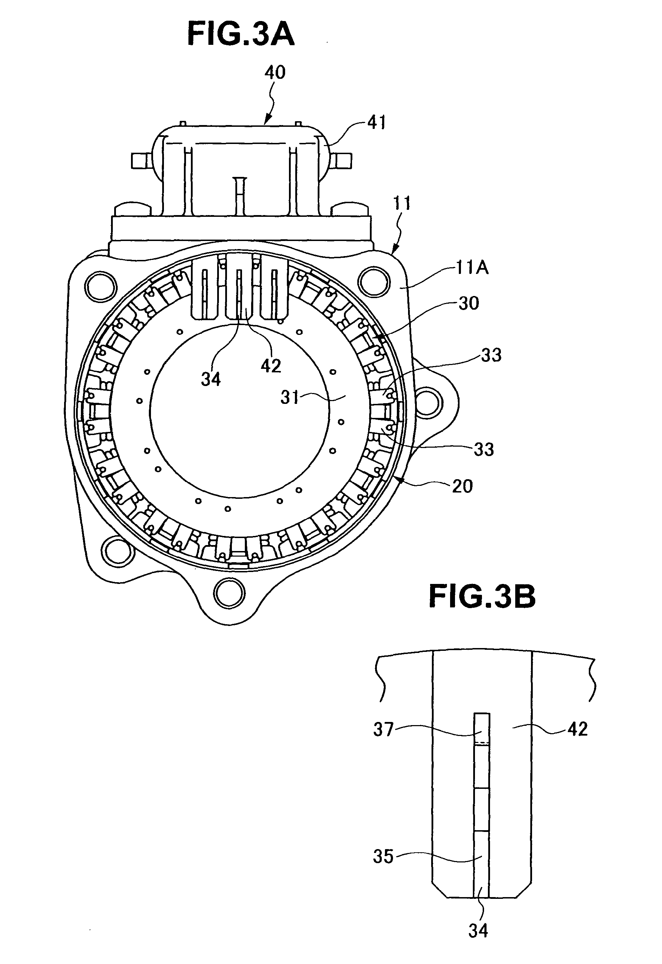

The stator assembly 11 is structured, as shown in FIGS. 2A to 3B, such that a sub assembly of a cylindrical stator 20 and a terminal 30 is stored in an inner periphery of a yoke integrally formed with the housing 11A, and a coupler 40 attached to the housing 11A is connected to the terminal 30.

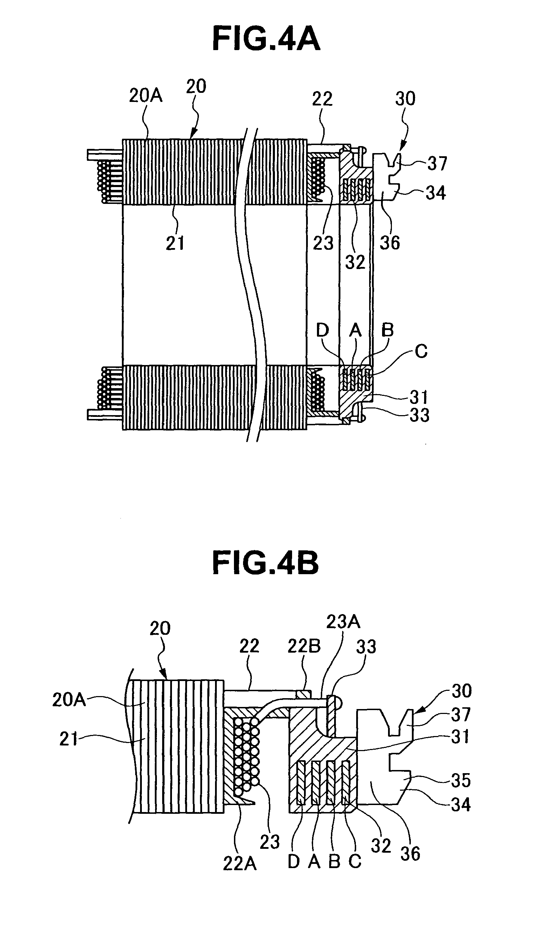

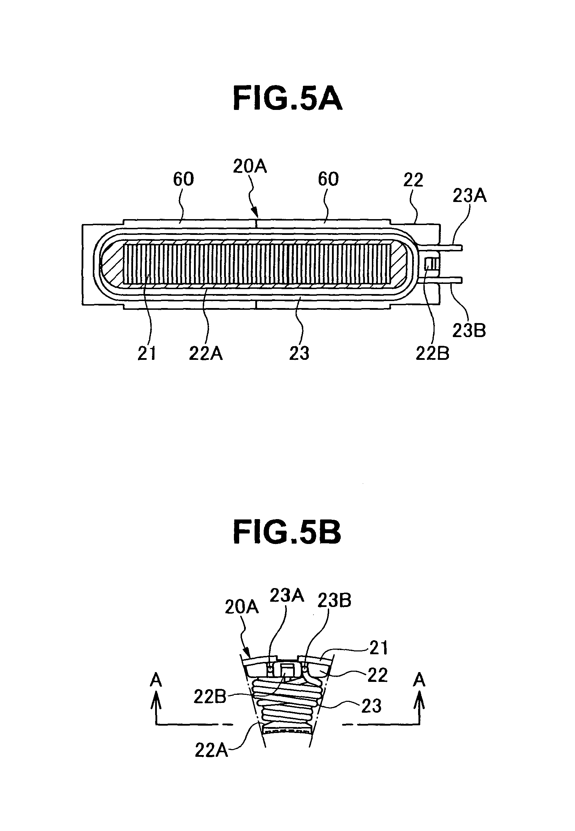

The stator 20 is structured, as shown in FIGS. 4A and 4B, such that a plurality of, for example, four in each of U-phase, V-phase and W-phase (totally twelve) core sub assemblies 20A in the present embodiment, fitted to the inner periphery of the housing 11A are arranged adjacently on a circumference. The core sub assembly 20A is structured by laminating a plurality of cores 21 constituted by silicon steel plates, attaching a resin bobbin 22 to the laminated core 21 and winding respective motor coils 23 forming three phases constituted by the U-phase, the V-phase and the W-phase around a coil winding portion 22A of the resin bobbin 22, as shown in FIGS. 5A and 5B. Each of the motor coils 23 is structured such that both ends constituted by a wind starting end and a wind terminating end are respectively set to a coil terminal 23A and a common terminal 23B, and these terminals 23A and 23B are extended to an outer side from one end side of the coil winding portion 22A of the resin bobbin 22. The resin bobbin 22 is provided with a terminal mounting portion 22B (a concave portion) protruding in an axial direction of the housing 11A along an inner periphery of the housing 11A, in one end side of the coil winding portion 22A.

The terminal 30 is attached to the resin bobbin 22 so as to be positioned in a peripheral direction, an axial direction and a diametrical direction by being embedded in a resin portion 31 formed by the resin mold so as to be integrated, in a state in which respective ring main bodies 32 of three bus rings A to C and the neutral bus ring D are arranged in parallel in an axial direction, and locking mounting hooks 31A provided at a plurality of positions in an outer periphery of the resin portion 31 to a concave portion of the terminal mounting portion 22B of the resin bobbin 22, as shown in FIGS. 2A to 4B. The ring main bodies 32 of the bus rings A to C are formed in a C-shaped form so as to be partly cut in the peripheral direction, and the ring main body 32 of the neutral bus ring D is formed in an annular shape continuously formed in the peripheral direction.

Each of the bus rings A to D is connected to the ring main body 32 thereof so as to extend to an outer side in the radial direction of the ring main body 32, and is provided with a terminal portion 33 protruding to an outer portion of the resin portion 31, as shown in FIGS. 2A to 4B. The bus ring A is provided with four terminal portions 33 to which the coil terminals 23A of four U-phase motor coils 23 are connected, in the present embodiment. The bus ring B is provided with four terminal portions 33 to which the coil terminals 23A of four V-phase motor coils 23 are connected, in the present embodiment. The bus ring C is provided with four terminal portions 33 to which the coil terminals 23A of four W-phase motor coils 23 are connected, in the present embodiment. The neutral bus ring D is provided with twelve terminal portions 33 to which the common terminals 23B of twelve motor coils 23 are connected, in the present embodiment. Accordingly, each of the motor coils 23 is star connected by connecting each of the terminal portions 33 connected to the ring main body 32 of each of the bus rings A to C of the terminal 30 and protruding from the resin portion 31 to the coil terminal 23A of each of the U-phase, V-phase and W-phase motor coils 23 of the stator 20, and connecting the terminal portion 33 connected to the ring main body 32 of the neutral bus ring D and protruding from the resin portion 31 to the common terminal 23B of each of the motor coils 23.

Each of the bus rings A to C is provided with an external portion connecting connection portion 34 which is connected to the ring main body 32 thereof so as to be folded and stand up in an axial perpendicular direction of the ring main body 32 from one end in a peripheral direction of the ring main body 32, and protrudes to an outer portion of the resin portion 31 as shown in FIGS. 2A to 4B. In the terminal 30, totally three connection portions 34 of the bus rings A to C are arranged in parallel to each other.

The coupler 40 is structured, as shown in FIGS. 2A to 3B, such that U-phase, V-phase and W-phase connection terminals 42 connected to a control circuit in an external portion are embedded in a resin body 41 screwed into the outer surface of the housing 11A. Each of the U-phase, V-phase and W-phase connection terminals 42 of the coupler 40 is inserted to an inner portion of the housing 11A, and is connected to the connection portion 34 of each of the bus rings A to C of the terminal 30. Each of the connection terminals 42 is inserted to each of the connection portions 34 so as to be mated, and welded.

In the terminal 30, each of the bus rings A to C is provided with a heat radiation portion 36 positioned in an outer side of the resin portion 31 and exposing to the outer side of the resin portion 31, between the ring main body 32 molded in the resin portion 31 and the connection portion 34, as shown in FIGS. 2A to 4B. At this time, each of the bus rings A to C has a plate-shaped piece 35 which is obtained by forming the ring main body 32 in a C-shaped plate form, is bent in an axial perpendicular direction of the ring main body 32 from one end in the peripheral direction of each of the ring main bodies 32 so as to stand up, and protrudes toward the outer side in the axial direction from the resin portion 31. The terminal 30 is structured such that a root side portion with respect to the resin portion 31 of the plate-shaped piece 35 of each of the bus rings A to C is formed as the heat radiation portion 36 extending in the radial direction of the ring main body 32 so as to be long. Further, a leading end side portion of the plate-shaped piece 35, a small piece portion in the leading end lower side protruding toward the outer side in the axial direction of the ring main body 32 from the center side end in the radial direction of the ring main body 32 in the plate-shaped piece 35 in the present embodiment is formed as the connection portion 34. In this case, the terminal 30 is provided with a positioning portion 37 for the connection terminal 42 of the coupler 40, in the leading end upper side of the plate-shaped piece 35.

The motor 10, as shown in FIG. 1, has a resolver 50 constituted by a resolver rotor portion 51 and a resolver stator portion 52. In other words, the resolver rotor portion 51 rotating together with the rotating shaft 13A is attached to an outer periphery of the rotating shaft 13A of the rotor assembly 13. Further, the resolver stator portion 52 is attached to a side of the stator 20, that is, an inner periphery of the end housing 12. The resolver stator 52 is arranged in such a manner as to surround the resolver rotor portion 51, and detects a rotational position of the rotating shaft 13A on the basis of a change of a reluctance generated with respect to the resolver rotor portion 51 caused by the rotation. A predetermined pattern of current is supplied to each of the U-phase, V-phase and W-phase motor coils 23 of the stator 20 via the coupler 40 and the terminal 30 by the external control circuit in correspondence to the detected rotational position of the rotating shaft 13A, and the drive of the motor 10 is controlled.

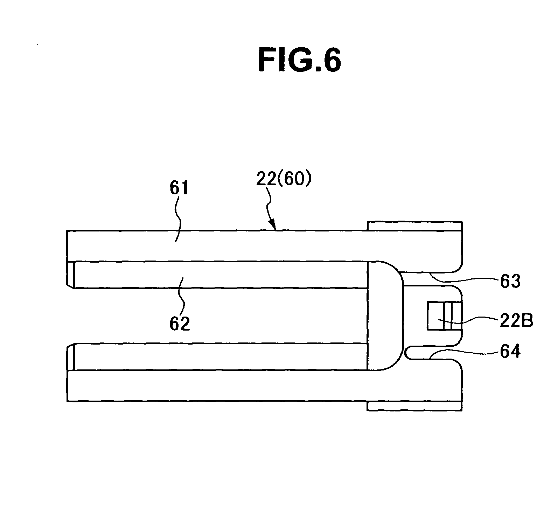

Accordingly, in the motor 10, as shown in FIGS. 5A and 5B, the bobbin 22 constituting the core sub assembly 20A of the stator 20 is formed by confronting two bobbin elements 60 and 60 divided into two in a longitudinal direction (a direction along a center axis of the stator 20) of the core sub assembly 20A so as to integrate. The bobbin elements 60 and 60 of the bobbin 22 form the rectangular tubular coil winding portion 22A, attaches the rectangular tube of the coil winding portion 22A to the core 21, and winds the coil 23 around upper and lower surfaces and both side surfaces between a base end wall 61 and a leading end collar 62 of the coil winding portion 22A, as shown in FIGS. 6 to 8.

The stator 20 is provided in a concave manner with a wind starting coil insertion groove 63 and a wind terminating coil insertion groove 64 extending to an outer side while being orthogonal to the base end wall 61 so as to be in parallel, in an outer peripheral side than the base end wall 61 of the coil winding portion 22A (in an outer peripheral side than the coil winding portion 22A in the diametrical direction of the stator 20), in an end surface of the one of the bobbin element 60 to which the terminal 30 is attached, from the bobbin elements 60 and 60 forming the bobbin 22. Further, the wind starting (the coil terminal 23A) and the wind terminating (the common terminal 23B) of the coil 23 are respectively inserted to the coil insertion grooves 63 and 64. The common terminal 23B is connected to the terminal portion 33 of the bus ring D of the terminal 30 mentioned above through the coil insertion groove 64 in the outer peripheral side of the coil winding portion 22A. The coil terminal 23A is connected to the terminal portion 33 in each of the bus rings A to C of the terminal 30 mentioned above through the coil insertion groove 63 in the outer peripheral side of the coil winding portion 22A.

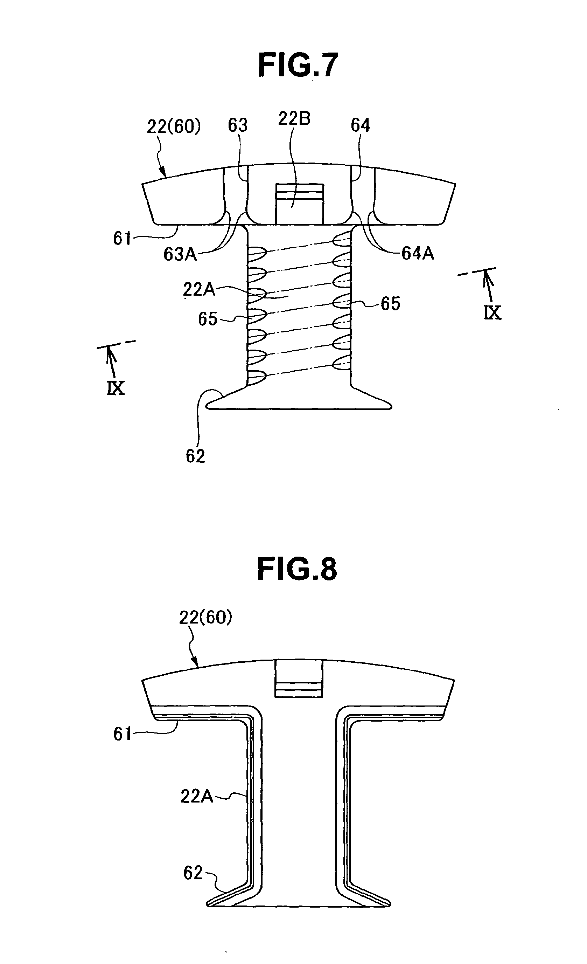

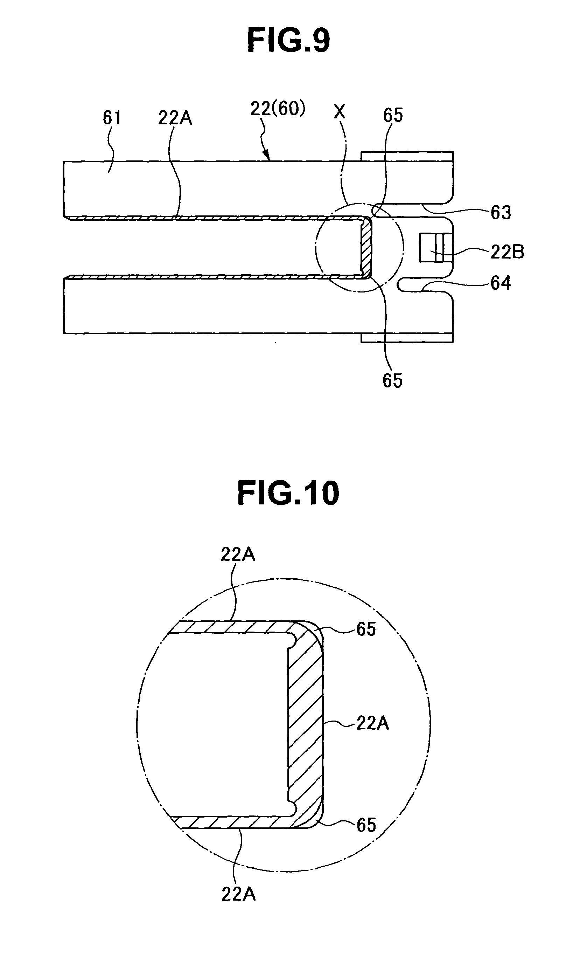

The bobbin elements 60 and 60 forming the bobbin 22 are provided with coil engagement grooves 65 only in four corner portions on the coil winding path of the rectangular tube in the coil winding portion 22A, as shown in FIGS. 7, 9 and 10. During winding of the coil 23 around the coil winding portion 22A, the winding position of the coil 23 is engaged with the coil engagement groove 65 provided in the corner portion of the rectangular tube in the coil winding portion 22A so as to be position regulated, and is regular wound.

In accordance with the present embodiment, the following operations and effects can be achieved.
(a) During winding of the coil 23 around the coil winding portion 22A of the bobbin 22, the winding position of the coil 23 is engaged with the coil engagement groove 65 provided in the corner portion of the rectangular tube in the coil winding portion 22A so as to be position regulated, and can be regular wound.
(b) The coil engagement groove 65 provided in the coil winding portion 22A of the bobbin 22 is provided only in the corner portions of the rectangular tube. Therefore, the resin forming mold of the bobbin 22 is simplified, and it is possible to improve a formability of the bobbin 22 so as to easily manufacture the bobbin 22.

Further, since the winding position of the coil 23 is positioned only by the corner portions of the rectangular tube, the coil winding position is not unnecessarily constrained. Accordingly, the coil winding workability is improved.

Further, as shown in FIG. 7, the coil come-off preventing locking portions 63A and 64A are provided in the coil insertion grooves 63 and 64 formed in a concave manner in one bobbin element 60 forming the bobbin 22 as mentioned above.

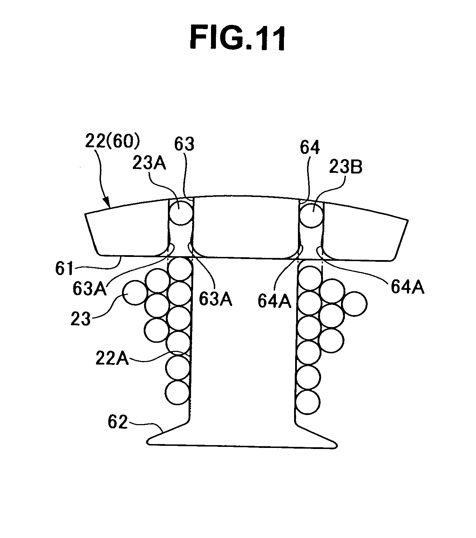

The coil come-off preventing locking portion 63A is provided in a concave manner approximately in an entire region in a depth direction of the coil insertion groove 63, in both side walls of the groove close to the base end wall 61 in a groove extending direction of the coil insertion groove 63, in the bobbin element 60 of the bobbin 22. The wind starting coil terminal 23A of the coil 23 wound around the coil winding portion 22A is pinched by the coil come-off preventing locking portion 63A in a state of being inserted to the coil insertion grove 63 so as to be prevented from coming off, as shown in FIG. 11, and is bent approximately perpendicularly toward the terminal portion 33 in each of the bus rings A to C of the terminal 30 in the opposite base end wall 61 side rather than the locking portion 63A so as to be connected to the terminal portion 33 in each of the bus rings A to C. In this case, the coil come-off preventing locking portion 63A may be structured such as to be provided in a convex manner only in an open edge side in the depth direction of the coil insertion groove 63, in both side walls of the groove close to the base end wall 61 in the groove extending direction of the coil insertion groove 63, and prevent the coil terminal 23A from coming off from the coil insertion groove 63 by pressing the coil terminal 23A of the coil 23 inserted to the coil insertion groove 63 from the open edge side of the coil insertion groove 63.

The coil come-off preventing locking portion 64A is provided in a concave manner approximately in an entire region in the depth direction of the coil insertion groove 64, in both side walls of the groove close to the base end wall 61 in the groove extending direction of the coil insertion groove 64, in the bobbin element 60 of the bobbin 22. The wind terminating common terminal 23B of the coil 23 wound around the coil winding portion 22A is pinched to the coil come-off preventing locking portion 64A in a state of being inserted to the coil insertion groove 64 so as to be prevented from coming off, as shown in FIG. 11, and is bent approximately perpendicularly toward the terminal portion 33 of the bus ring D of the terminal 30 in the opposite base end wall 61 side than the locking portion 64A so as to be connected to the terminal portion 33 of the bus ring A. In this case, the coil come-off preventing locking portion 64A may be structured such as to be provided in a convex manner only in an open edge side in a depth direction of the coil insertion groove 64, in both side walls of the groove close to the base end wall 61 in the groove extending direction of the coil insertion groove 64, and prevent the common terminal 23B from coming off from the coil insertion groove 64 by pressing the common terminal 23B of the coil 23 inserted to the coil insertion groove 64 from the open edge side of the coil insertion groove 64.

Therefore, in accordance with the present embodiment, the following operations and effects can be achieved.

It is possible to prevent each of the wind starting and the wind terminating of the coil 23 from easily sliding out and coming off from the coil insertion grooves 63 and 64 due to an elastic force of the coil itself, by inserting each of the wind starting and the wind terminating of the coil 23 to the coil insertion grooves 63 and 64 provided in the bobbin 22, and locking to the coil come-off preventing locking portions 63A and 64A provided in the coil insertion grooves 63 and 64. Accordingly, it is possible to easily and securely position and hold the wound coil 23 to the bobbin 22, and it is possible to prevent the coil winding from coming apart.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A rotating armature, comprising:
a resin bobbin around a core constituting a stator;
a coil wound around a coil winding portion of the bobbin;
each of a wind starting and a wind terminating of the coil inserted to a coil insertion groove provided in an outer peripheral side than the coil winding portion in the bobbin: and
a coil come-off preventing locking portion provided in the coil insertion groove of the bobbin.

2. A rotating armature as claimed in claim 1, wherein the stator is structured by arranging a plurality of core sub assemblies circumferentially in an adjacent manner, per respective U-phase, V-phase and W-phase, and
the bobbin constructs the core sub assembly of the stator, and is formed by confronting to integrate two bobbin elements separated into two sections in a direction along a center axis of the stator corresponding to a longitudinal direction of the core sub assembly.

3. A rotating armature as claimed in claim 2, wherein the bobbin element of the bobbin forms a rectangular tubular coil winding portion, a rectangular tube of the coil winding portion is attached to the core, and the coil is wound around upper and lower surfaces and both side surfaces between a base end wall of the coil winding portion and a leading end collar.

4. A rotating armature as claimed in claim 3, wherein the stator is provided in a concave manner with a coil insertion groove for wind starting and a coil insertion groove for wind terminating extending to an outer side while being orthogonal to a base end wall of the coil winding portion so as to be in parallel, in an outer peripheral side than the base end wall, in an end surface of the bobbin element in a side to which the terminal comes close, in the bobbin elements forming the bobbin.

5. A rotating armature as claimed in claim 1, wherein a coil engagement groove is provided only in four corner portions on a coil winding path in the coil winding portion of the bobbin.

6. A rotating armature as claimed in claim 3 or 4, wherein the coil come-off preventing locking portion is constituted by a bobbin element of the bobbin, and is provided in a convex manner approximately in an entire region in a depth direction of the coil insertion groove, in both side walls of the groove close to the base end wall in the extending direction of the coil insertion groove.

7. A rotating armature as claimed in claim 3 or 4, wherein the coil come-off preventing locking portion is constituted by a bobbin element of the bobbin, and is provided in a convex manner only in an open edge side in a depth direction of the coil insertion groove, in both side walls of the groove close to the base end wall in the extending direction of the coil insertion groove.
